# EUROPEAN PATENT APPLICATION

(11) **EP 1 434 458 A1**
(43) Date of publication of application: **30.06.2004**
(21) Application number: 03733099.0
(22) Date of filing: 28.05.2003
(51) Int. Cl.: H04Q 7/38

(54) **WIRELESS COMMUNICATION DEVICE AND USAGE BAND DETERMINATION METHOD**

(30) Priority: 30.05.2002 JP 2002156857
(71) Applicant: Oie, Yuji, Dazaifu-shi, Fukuoka 818-0121 (JP); Koga, Hiroyuki, Nara-shi, Nara 631-0072 (JP); MATSUSHITA ELECTRIC INDUSTRIAL CO., LTD., Kadoma-shi, Osaka 571-8501 (JP)
(72) Inventor: 0IE, Yuji, Dazaifu-shi, Fukuoka 818-0121 (JP); KOGA, Hiroyuki, Nara-shi, Nara 631-0072 (JP); SHOJI, Takahiro, Yokohama-shi, Kanagawa 221-0005 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: PCT/JP2003/006631
(87) International publication number: WO 2003/103329

(57) **Abstract**

In a wireless communication system where a fixed radio bandwidth is used, a wireless communication apparatus and a usage bandwidth determination method that guarantee the QoS of real time application data without changing the configurations of the existing base station apparatus and IP network. A wireless resource control section (170) negotiates with a base station apparatus (20) when a wireless communication terminal apparatus (10) changes over from an idle mode to a communication mode, to determine a usable radio bandwidth. A bandwidth estimation section (180) estimates the available bandwidth for the non-real time application from the usable radio bandwidth and the required bandwidth for the real time application. An awnd estimation section (190) estimates the maximum awnd that shows the maximum amount of the packet that can be received in the wireless communication terminal apparatus (10) from the available bandwidth for the non-real time application.

## Description

### Technical Field

The present invention relates to wireless communication apparatus and a usage bandwidth determination method, and particularly relates to the wireless communication apparatus and a usage bandwidth determination method used in a wireless communication system where a TCP (Transmission Control Protocol) flow and a UDP (User Datagram Protocol) flow coexist.

### Background Art

In the IP network today, communication methods that take into account not only the bandwidth, but also the quality of service (QoS) including delay and such, of the data communication path are under study. DiffServ (Differentiated Services) is an example of such a method taking the Qos into account, in which the class of service (CoS) is set for each flow, and in which routing is executed depending on the priority of the CoS, thereby enabling communication not only based on the congestion state of the communication path but also based on the priority of each dataflow. Such a communication schemes taking into account the QoS such as DiffServ are generally used in wired networks.

The communication scheme taking the QoS into account is disclosed in Laid-Open Japanese Patent Publication No.2000-295276, as a technique for introducing into an IP network which is a narrower bandwidth provided with a wireless link with higher data error rates compared to the wired network. In an intermediate switching apparatus between the IP network and a wireless communication system, the QoS of the dataflow is guaranteed by changing the radio bandwidth by use of a traffic quantity of each dataflow, communication quality information between radio sections provided from a wireless base station apparatus, and information of effective traffic and retransmission provided from a subscriber switchboard.

However, in the conventional method, it is necessary to change the configurations of the intermediate switching apparatus (subscriber switchboard) between the IP network and a wireless communication system and the wireless base station apparatus. In this case, the problem is that it is difficult to be applied to the existing wireless communication system. Moreover, the radio bandwidth needs to be changed in accordance with the bandwidth required for guaranteeing the QoS. However, when the required radio bandwidth can not be obtained, the problem is that it is difficult to guarantee the QoS.

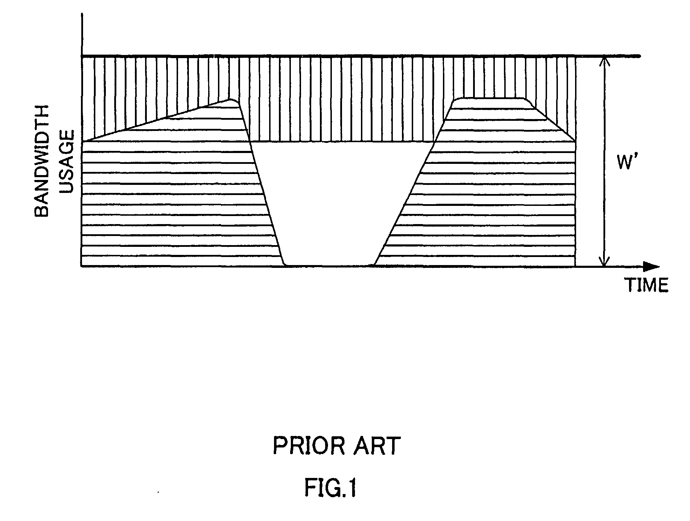

FIG.1 is an illustrative case of the above-described problems in the wireless communication system where a TCP flow and a UDP flow are mixed. In FIG.1, the radio bandwidth is fixed to be W', therefore when the usage bandwidth for the TCP flow shown by the lateral lines fluctuates due to flow control on the transmission side, the usage bandwidth occupies the bandwidth for the UDP flow shown by the vertical lines. That is, the bandwidth for the UDP flow, which is real time application data, is not secured, resulting in the delay of the real time application data or packet discard. In other words, the QoS of the UDP flow is not guaranteed.

### Disclosure of Invention

An object of the present invention is to guarantee the QoS of real time application data in a wireless communication system using a fixed radio bandwidth, without changing the configurations of the existing base station apparatus and IP network.

A subject of the present invention is to provide a guaranteed bandwidth for the UDP flow, which is a real time application, by limiting the bandwidth for the TCP flow when transmitting the UDP flow and the TCP flow at the same time in a fixed radio bandwidth.

According to one aspect of the present invention, wireless communication apparatus is configured including acquiring means for acquiring a required bandwidth for transmitting fixed rate data that can be transmitted at a fixed data rate, and estimation means for estimating an available bandwidth for transmitting variable rate data that can be transmitted at variable data rates, based on the acquired required bandwidth and a predetermined radio bandwidth for use for wireless communication.

According to another aspect of the present invention, a usage bandwidth determination method has the steps of: acquiring the required bandwidth for transmitting fixed rate data that is transmitted at a fixed data rate; and estimating an available bandwidth for transmitting the variable rate data that can be transmitted at variable data rates, based on the acquired required bandwidth and a predetermined radio bandwidth for use for the wireless communication.

### Brief Description of the Drawings

FIG.1 is a view showing an example of conventional usage of the radio bandwidth;
FIG.2 is a view showing an example of the configurations of an IP network and a wireless communication system according to a first embodiment of the present invention;
FIG.3 is a block diagram showing the configuration of a wireless communication terminal apparatus according to the first embodiment;
FIG.4 is a view showing an example of a data field of a TCP segment according to the first embodiment;
FIG.5 is a view showing an example of using a radio bandwidth according to the first embodiment; and
FIG.6 is a block diagram showing the configuration of the wireless communication terminal apparatus according to the second embodiment of the present invention.

### Best Mode for Carrying Out the Invention

Embodiments of the present invention will be explained below with reference to the drawings.

### (First Embodiment)

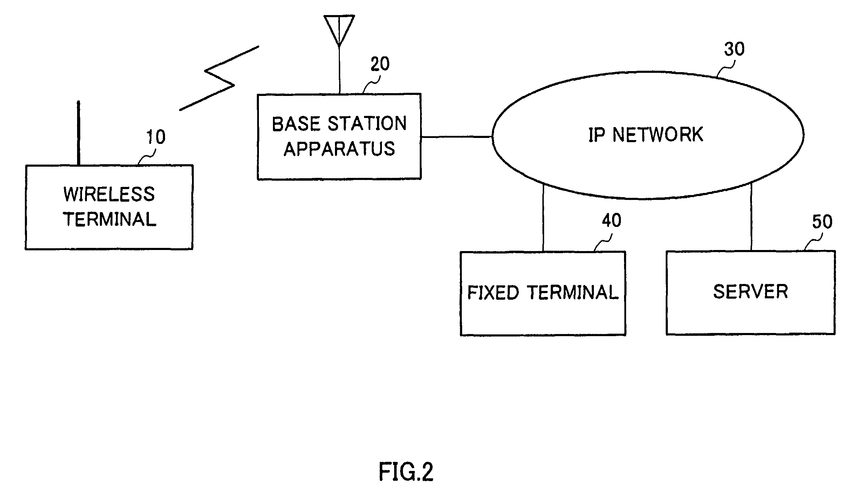

FIG.2 is a view showing an example of an IP network and a wireless communication system. In FIG. 2, a wireless communication terminal apparatus 10 and a base station apparatus 20 communicate real time application data, which is a UDP flow, and non-real time application data, which is a TCP flow, sharing a predetermined radio bandwidth. Also, the base station apparatus 20 communicates with a fixed terminal 40 or a server 50 via an IP network 30.

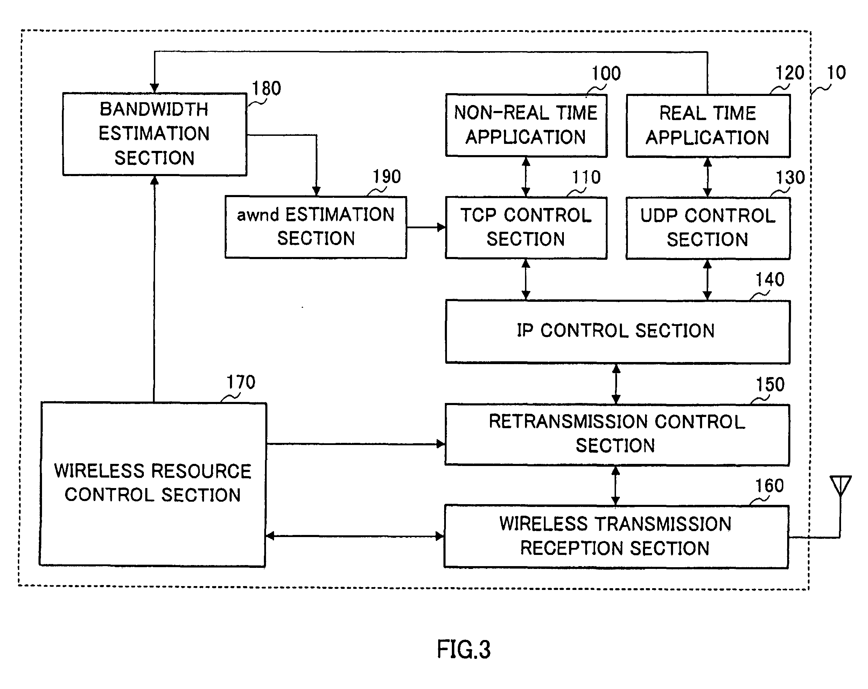

FIG.3 is a block diagram showing the configuration of the wireless communication terminal apparatus 10. The wireless communication terminal apparatus 10 shown in FIG.3 includes a non-real time application 100, a TCP control section 110, a real time application 120, a UDP control section 130, an IP control section 140, a retransmission control section 150, a wireless transmission reception section 160, a wireless resource control section 170, a bandwidth estimation section 180, and an awnd (Advertised WiNDow) estimation section 190.

The non-real time application 100 provides a non-real time application service that can be transmitted at variable data rates such as FTP (File Transfer Protocol) and WWW (World Wide Web) browsing. The TCP control section 110 forms a TCP segment by adding a TCP header such as a source port number and a sequence number to non-real time application data. The real time application 120 provides a real time application service such as voice and moving image, which are delay sensitive and require a fixed data rate. The UDP control section 130 forms a UDP segment by adding a port number to real time application data.

The IP control section 140 generates an IP packet by adding an IP header such as a source address and a destination address to the TCP segment and the UDP segment. The retransmission control section 150 performs retransmission control in a wireless link by dividing the IP packet into predetermined sizes. The wireless transmission reception section 160 applies predetermined radio processing such as encoding and modulation to the packet divided into predetermined sizes, to transmit via an antenna.

When the wireless communication terminal apparatus 10 changes over from an idle mode to a communication mode, the wireless resource control section 170 negotiates with the base station apparatus 20 and determines a usable radio bandwidth. The bandwidth estimation section 180 estimates the available bandwidth for the non-real time application, from the usable radio bandwidth and the required bandwidth for the real time application. From the available bandwidth for the non-real time application, the awnd estimation section 190 estimates the maximum awnd that shows the maximum amount of the packet that can be received in the wireless communication terminal apparatus 10.

Next, operation of the wireless communication terminal apparatus 10 having the above-described configuration will be explained.

First, at the time of performing transmitting operations, when the wireless communication terminal apparatus 10 changes over from the idle mode to the communication mode, the wireless resource control section 170 negotiates with the base station apparatus 20 and determines the usable radio bandwidth. The determined radio bandwidth is notified to the bandwidth estimation section 180. Simultaneously, by the real time application 120, the bandwidth required for transmitting the real time application data is notified to the bandwidth estimation section 180.

Then, by the bandwidth estimation section 180, the required bandwidth for the real time application data is subtracted from the usable radio bandwidth, and the available bandwidth for the non-real time application data is calculated. The calculated available bandwidth is notified to the awnd estimation section 190. Then, the awnd estimation section 190 estimates the maximum awnd of the TCP based on the available bandwidth allowed for the non-real time application data and outputs the result to the TCP control section 110. The maximum awnd estimated here corresponds to a window size capable of securing the usage bandwidth for the UDP flow for transmitting the real time application data in the radio bandwidth between the wireless communication terminal apparatus 10 and the base station apparatus 20.

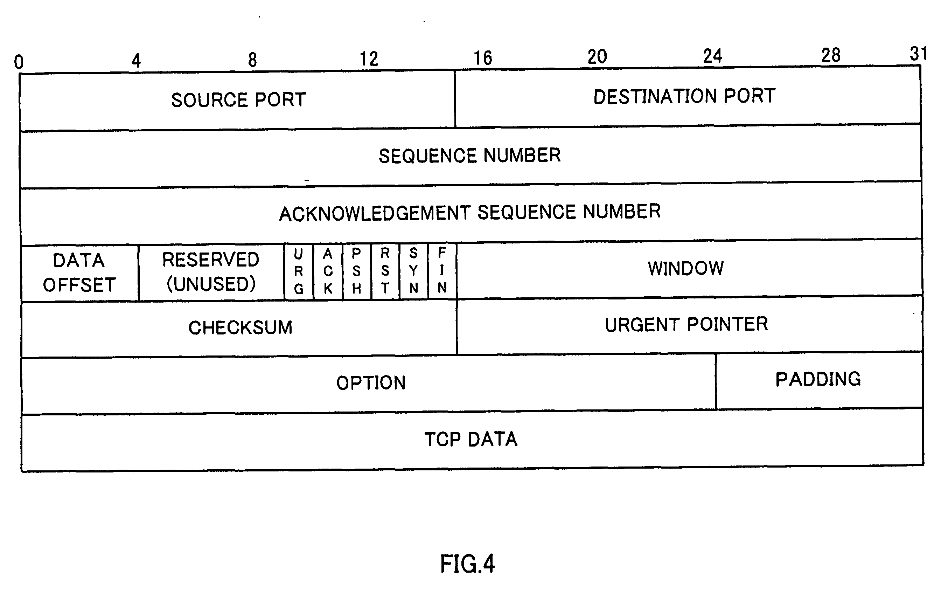

Then, by the TCP control section 110, the window size actually used is subtracted from the maximum awnd, and the receivable awnd is thus calculated. Moreover, by the TCP control section 110, the TCP segment having the data field shown in FIG. 4 is generated from the non-real time application data (TCP data) generated by the non-real time application 100. At this time, the receivable awnd is recorded in the window field of the TCP segment.

The TCP segment is outputted to the IP control section 140 and added with the IP header such as a source address and a destination address, and an IP packet is generated. Then, by the retransmission control section 150, the IP packet is divided into predetermined sizes. The wireless transmission reception section 160 applies predetermined radio processing such as encoding and modulation to the packet divided into predetermined sizes, to transmit via an antenna. The transmitted packet is received by the base station apparatus 20, and from the base station apparatus 20, the packet is received by the fixed terminal 40 and the server 50 via the IP network 30. When the fixed terminal 40 and the server 50 transmit data to the wireless communication terminal apparatus 10, the receivable awnd included in the TCP header of the received packet and a cwnd (Congestion WiNDow) showing a transmittable window size for the apparatus are compared, and the next TCP segment is sent with the smaller window size. When the receivable awnd is smaller, the fixed terminal 40 and the server 50 send the TCP segment up to the number of the window sizes of the receivable awnd. However, the receivable awnd is calculated so as to secure the required bandwidth for the real time application data, which is a UDP flow. Therefore, when the TCP flow is sent to the wireless communication terminal apparatus 10 from the base station apparatus 20, the usage bandwidth for the UDP flow needs not be used.

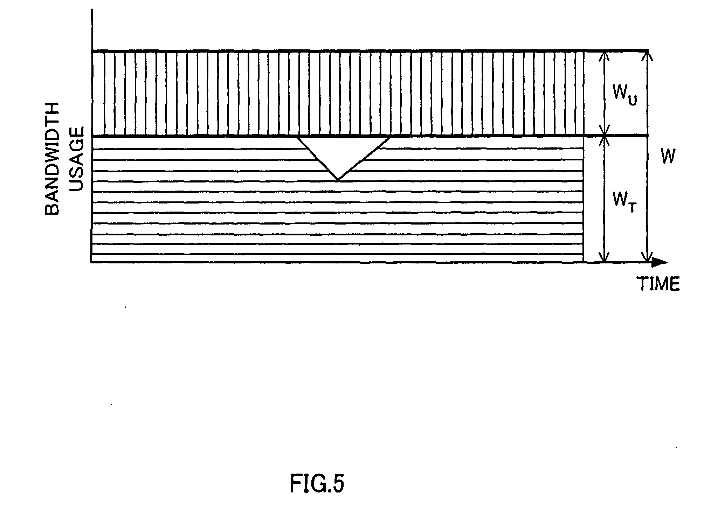

Specifically, as shown in FIG.5, for example, even when the radio bandwidth used between the wireless communication terminal apparatus 10 and the base station apparatus 20 is fixed to W, the usage bandwidth for transmitting the TCP flow shown by the lateral lines in the figure is WT at maximum, and the bandwidth used for transmitting the UDP flow shown by the vertical lines in the figure can be WU at all times.

Then, the transmitted TCP segment is sent to the wireless communication terminal apparatus 10 via the IP network 30 and the base station apparatus 20. The packet is received by the wireless transmission reception section 160 via an antenna, and the wireless transmission reception section 160 applies predetermined radio processing such as demodulation and decoding to the packet. The retransmission control section 150 executes retransmission control, and the IP packet is assembled from the received packet. The IP packet is outputted via IP control section 140, and the non-real time application data is outputted to the non-real time application 100 via TCP control section 110 and processed, and the real time application data is outputted to the real time application 120 via the UDP control section 130 and processed.

According to the present invention, the wireless communication terminal apparatus estimates the available bandwidth for transmitting the non-real time application data by subtracting the required bandwidth for the real time application data from the radio bandwidth used in the wireless communication. Based on the estimated available bandwidth, the awnd of window size that can be received by its own receiver is calculated, and, the calculated awnd is notified to the fixed terminal and the server, which are transmit sides connected to the IP network. Consequently, the fixed terminal and the server send the non-real time application data of the amount that can be transmitted, while securing the bandwidth for the real time application data. In this way, in the wireless communication system where the fixed radio bandwidth is used, the QoS of the real time application data can be guaranteed without changing the configurations of the existing base station apparatus and the IP network.

### (Second Embodiment)

The configurations of the IP network and the wireless communication system according to a second embodiment of the present invention are the same as those of FIG.2, and so explanation is omitted here. In the present embodiment, the base station apparatus 20 send the TCP segment where the receivable awnd is recorded.

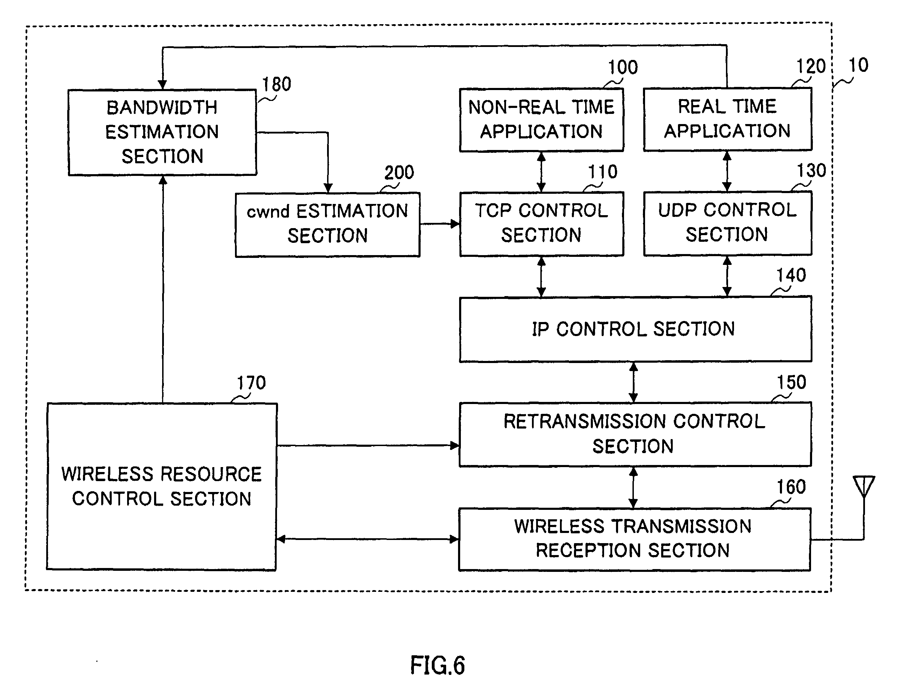

FIG.6 is a block diagram showing the configuration of the wireless communication terminal apparatus 10. In the wireless communication terminal apparatus in FIG.6, the parts identical to those in FIG.3 are assigned the same numerals without further explanation.

A cwnd estimation section 200 estimates the maximum cwnd that shows the maximum amount of the packets that can be transmitted by the wireless communication terminal apparatus 10 from the available bandwidth for the non-real time application.

Next, the operation of the wireless communication terminal apparatus 10 having the above-described configuration will be explained.

First, in the transmission operation, the wireless resource control section 170 negotiates with the base station apparatus 20, which is a communicating party, when the wireless communication terminal apparatus 10 changes over from the idle mode to the communication mode, and determines a usable radio bandwidth. The determined radio bandwidth is notified to the bandwidth estimation section 180. Simultaneously, by the real time application 120, the bandwidth required for transmitting the real time application data is notified to the bandwidth estimation section 180.

Then, by the bandwidth estimation section 180, the required bandwidth for the real time application data is subtracted from the usable radio bandwidth, and the available bandwidth for the non-real time application data is calculated. The calculated available bandwidth is notified to the cwnd estimation section 200. Then, the cwnd estimation section 200 estimates the maximum cwnd of the TCP based on the available bandwidth allowed for the non-real time application data, to output to the TCP control section 110. The maximum cwnd estimated here corresponds to a window size capable of securing the usage bandwidth for the UDP flow for transmitting the real time application data in the radio bandwidth between the wireless communication terminal apparatus 10 and the base station apparatus 20.

Then, by the TCP control section 110, the window size actually used is subtracted from the maximum cwnd, and the transmittable cwnd is calculated.

Meanwhile, the TCP segment transmitted from the base station apparatus 20 is processed by the TCP control section 110, and the receivable awnd of the base station apparatus 20 is acquired. Then, the receivable awnd and the transmittable cwnd are compared by the TCP control section 110, and the next TCP segment is sent with the smaller window size. When the receivable awnd is smaller, the wireless communication terminal apparatus 10 sends the TCP segment up to the number of the window sizes of the receivable awnd. However, the receivable awnd is smaller than the transmittable cwnd calculated so as to secure the required bandwidth for the real time application data, which is a UDP flow. Therefore, the usage bandwidth for the UDP flow needs not to be used. Moreover, when the transmittable cwnd is smaller, the wireless communication terminal apparatus 10 sends the TCP segment up to the number of the window sizes of the transmittable cwnd of its own transmitter. However, the transmittable cwnd is calculated so as to secure the required bandwidth for the real time application data, which is a UDP flow. Therefore, the usage bandwidth for the UDP flow needs not be used.

According to this embodiment, the wireless communication terminal apparatus estimates the available bandwidth for transmitting the non-real time application data by subtracting the required bandwidth for the real time application data from the radio bandwidth used in wireless communication. Based on the estimated available bandwidth, the cwnd of a window size that can be transmitted by its own transmitter is calculated. The calculated cwnd and the awnd of a window size that can be received by the base station apparatus, which is a communicating party, are compared. The data is transmitted with the smaller window size. Consequently, the non-real time application data of the amount that can be transmitted, while securing the bandwidth for the real time application data is sent. In this way, in the wireless communication system where the fixed radio bandwidth is used, the QoS of the real time application data on an uplink channel can be guaranteed.

As described above, according to the present invention, the QoS of real time application data can be guaranteed in the wireless communication system where the fixed radio bandwidth is used, without changing the configurations of the existing base station apparatus and the IP network.

This present application is based on Japanese Patent Application No.2002-156857 filed on May 30, 2002, entire content of which is expressly incorporated herein by reference.

### Industrial Applicability

The present invention is applicable to wireless communication apparatus and a usage bandwidth determination method. More particularly, the present invention is applicable to a wireless communication apparatus and a usage bandwidth determination method used in a wireless communication system where a TCP flow and a UDP flow coexist.

## Claims

1. A wireless communication apparatus comprising:
an acquiring section that acquires a required bandwidth for transmitting fixed rate data that is transmitted at a fixed data rate; and
an estimation section that estimates an available bandwidth for transmitting variable rate data that can be transmitted at a variable data rate based on the acquired required bandwidth and a predetermined radio bandwidth for use for wireless communication.

2. The wireless communication apparatus according to claim 1, wherein the estimation section estimates the available bandwidth for the variable rate data by subtracting the acquired required bandwidth from the predetermined radio bandwidth.

3. The wireless communication apparatus according to claim 1, further comprising:
a determination section that determines a maximum receivable amount of the variable rate data in accordance with the available bandwidth for the variable rate data estimated by the estimation section; and
a transmission section that transmits information including the determined maximum receivable amount of the variable rate data.

4. The wireless communication apparatus according to claim 1, further comprising:
a receiving section that receives information including a maximum receivable amount of the variable rate data at a terminal of a communicating party;
a determination section that determines the maximum transmittable amount of the variable rate data in accordance with the available bandwidth for the variable rate data estimated by the estimation section; and
a transmission section that transmits data including data corresponding to a smaller variable rate data of the determined maximum transmittable amount of the variable rate data and the maximum receivable amount of the variable rate data.

5. A wireless communication terminal apparatus having the wireless communication apparatus according to claim 1.

6. A usage bandwidth determination method comprising the steps of:
acquiring a required bandwidth for transmitting fixed rate data that is transmitted at a fixed data rate; and
estimating an available bandwidth for transmitting variable rate data that can be transmitted at a variable data rate based on the acquired required bandwidth and a predetermined radio bandwidth for use for wireless communication.
